# EUROPÄISCHE PATENTSCHRIFT

(11) **EP 0 379 876 B1**
(45) Veröffentlichungstag und Bekanntmachung des Hinweises auf die Patenterteilung: **25.01.1995**
(21) Anmeldenummer: 90100270.9
(22) Anmeldetag: 08.01.1990
(51) Int. Cl.: C01F 11/36, C01F 11/32, C01F 11/46

(54) **Verfahren zur Abtrennung von Barium aus wasserlöslichen Strontiumsalzen**
Process for the separation of barium from aqueous strontium salt solutions
Procédé de séparation de baryum des solutions aqueuses des sels de strontium

(30) Priorität: 13.01.1989 DE 3900878
(43) Veröffentlichungstag der Anmeldung: 01.08.1990
(73) Patentinhaber: Kali-Chemie Aktiengesellschaft, D-30173 Hannover (DE)
(72) Erfinder: Porta, Jacopo, I-55046 Querceta (Lucca) (IT)
(74) Vertreter: Lauer, Dieter, Dr.

(56) Entgegenhaltungen:
- FR-A- 2 618 136
- US-A- 3 029 133
- CHEMICAL ABSTRACTS, vol. 99, no. 8, 1983 Columbus, Ohio, USA Evzhanov, Kh etal.: "Precipitation of strontium and calcium sulfate from highly mineralized waters" Seite 108; linke Spalte; ref. no. 55773D
- CHEMICAL ABSTRACTS, vol. 101, no. 26, Dezember 1984 Columbus, Ohio, USA Baryshnikov, N.V. et al.: "Removal of barium from strontium-containing solutions" Seite 113; linke Spalte; ref. no. 232622M
- CRC Handbook of Chemistry and Physics, 65th Ed. 1984, Seiten B-76, B-148;
- Biltz/Biltz, "Ausführung quantitativer Analysen", 9. Auflage 1965, S. 54, 66, 67

## Beschreibung

Die Erfindung betrifft ein Verfahren zur Abtrennung von Barium aus wasserlöslichen Strontiumsalzen.

Das wichtigste Mineral, das als Rohstoff zur Herstellung von Strontiumverbindungen dient, ist Coelestin. Es besteht vorwiegend aus Strontiumsulfat und ist gewöhnlich mit Bariumverbindungen verunreinigt. Aufgrund der Verwendung von Strontiumverbindungen in gewissen Bereichen der Technik, z.B. bei der Herstellung von Farbfernsehbildröhren, bei der Herstellung von keramischen Permanentmagneten und bei der Verwendung als Zusatz für Zahnpasten ist es häufig wünschenswert, den durch das natürliche Vorkommen bedingten Gehalt an Barium in Strontiumsalzen abzutrennen.

Nach Methoden zur Bariumabtrennung aus Strontiumverbindungen wurde seit langem intensiv gesucht.

Als einzige technisch anwendbare Methode zur Abtrennung von Barium aus Strontiumsalzen war lange die Fällung mittels Chromat bekannt. Chromat ist jedoch toxisch und muß daher durch aufwendige Reinigungsoperationen aus dem gewonnenen Strontiumsalz entfernt werden. Eine andere technisch anwendbare Methode wird in der Offenlegungsschrift DE-OS 18 16 891 angegeben. Dort wird die Abtrennung des Bariums mittels der Verbindung SrSO₄·2H₂O bewirkt, die gegebenenfalls auch durch Schwefelsäurezugabe in situ erzeugt wird. Diese Art der Abtrennung ist jedoch nicht einfach zu beherrschen, da sich das Strontiumsulfat nur unter ganz bestimmten eng begrenzten Reaktionsbedingungen bildet.

Das Löslichkeitsprodukt von BaSO₄ ist sehr klein (siehe CRC Handbook of Chemistry and Physics, 65th Ed. 1984, Seiten B-76 und B-148). Die Abtrennung gefällten Bariumsulfats ist nicht problemlos möglich, (siehe Blitz/Blitz, "Ausführung quantitativer Analysen", 9. Auflage 1965, Seiten 54, 66 und 67).

Das russische Patent SU 1 117 284 (Chemical Abstracts 101 (1984), 232622 m) offenbart die Fällung von Barium aus Strontiumsalzen mittels des schwach basischen Anionenaustauschers Anionit AN-21 in der sulfatierten Form. die Literaturstelle Kh. Evzhanov et al., Izv. Akad. Nauk. Turkm. SSR, Ser. Fiz.-Tekh., Klim. Geol. Nauk 1983, Seiten 100 bis 103 (Chemical Abstracts 99 (1983), 55 773 d) offenbart, daß SrSO₄ aus Ca-enthaltenden Lösungen mittels Na₂SO₄ gefällt werden kann.

Die bislang bekannten Verfahren zur Abtrennung von Barium aus wasserlöslichen Strontiumverbindungen besitzen somit den Nachteil, das Einbringen toxischer Stoffe zu umfassen oder technisch nicht einfach durchführbar zu sein.

Aufgabe der Erfindung ist es, eine technisch anwendbare Methode zur Abtrennung von Barium aus Strontiumsalzen anzugeben, die die Nachteile der bekannten Verfahren überwindet. Diese Aufgabe wird durch das erfindungsgemäße Verfahren gelöst.

Das erfindungsgemäße Verfahren zur Abtrennung von Barium aus wasserlöslichen Strontiumsalzen, ausgewählt aus der Gruppe umfassend Strontiumacetat, Strontiumnitrat und Strontiumhalogenide mit Ausnahme von Strontiumfluorid, umfaßt die Schritte
a) Fällung eines Feststoffes durch Versetzen einer wäßrigen Barium enthaltenden Lösung des Strontiumsalzes im sauren pH-Bereich mit einer Sulfat freisetzenden Verbindung,
b) Abtrennen des ausgefallenen Feststoffes aus der Lösung und
c) Gewinnen des an Barium abgereicherten Strontiumsalzes aus der Lösung, und ist dadurch gekennzeichnet, daß die wäßrige Lösung das Strontiumsalz in einer Konzentration von 1 Gew.-% bis hin zur Sättigungskonzentration enthält, daß man als Sulfat freisetzende Verbindung Alkalisulfat verwendet, und zwar in Form einer wäßrigen Lösung, die das Alkalisulfat in einer Konzentration von 0,5 Gew.-% bis hin zur Sättigungskonzentration enthält, daß die Lösung des Strontiumsalzes einen pH-wert zwischen 2 und 6 aufweist, mit der Maßgabe, daß pro Stunde 30 bis 600 % der stöchiometrisch zur vollständigen Bariumabtrennung notwendigen Menge des Alkalisulfats zugegeben werden, und daß man in Schritt b) die Abtrennung des Feststoffes nach einer Nachreaktionsphase durchführt.

Bevorzugt verwendet man Strontiumnitrat oder Strontiumhalogenid, mit Ausnahme des Fluorids, beispielsweise SrCl₂ oder SrBr₂. Besonders bevorzugt verwendet man wässrige Lösungen von Strontiumchlorid. Die Herstellung derartiger Lösungen ist dem Fachmann bekannt. Beispielsweise kann man die entsprechenden, noch Bariumverbindungen enthaltenden Salze oder ihre Hydrate in Wasser auflösen.

Vorzugsweise liegt die Konzentration des Strontiumsalzes zwischen etwa 5 Gew.-% und etwa 80 % der Sättigungskonzentration, besonders bevorzugt zwischen etwa 10 Gew.-% und etwa 80 % der Sättigungskonzentration.

Unter Alkalisulfat werden im Rahmen der vorliegenden Erfindung die Sulfate und Hydrogensulfate der Ionen der ersten Hauptgruppe des Periodensystems sowie des Ammoniumions verstanden; vorzugsweise verwendet man die Sulfate, insbesondere Kalium- und/oder Natriumsulfat. Besonders bevorzugt verwendet man Natriumsulfat. Diese Salze können wasserfrei oder in Form der Hydrate eingesetzt werden.

Bevorzugt setzt man eine Alkalisulfatlösung ein, deren Alkalisulfatgehalt zwischen etwa 0,5 und etwa 15 Gew-%, vorzugsweise zwischen etwa 1 und 10 Gew.-% liegt.

In welcher absoluten Menge der Fachmann das Alkalisulfat einsetzt, hängt ab von den Reinheitsanforderungen an das Produkt. Gibt man beispielsweise weniger als etwa 100 % der stöchiometrisch zur vollständigen Bariumabtrennung notwendigen Menge an Alkalisulfat zu, ist die abtrennende Wirkung auf das Barium verhältnismäßig gering. Gibt man einen sehr großen Überschuß an Alkalisulfat zu, beispielsweise mehr als 800 % der stöchiometrisch zur Abtrennung des Bariums notwendigen Menge, wird der Prozeß unökonomisch, da mit dem abzutrennenden Feststoff neben dem unerwünschten Barium auch Strontium mitgefällt wird. Gute Ergebnisse wurden erzielt, wenn man zwischen etwa 100 und etwa 800 %, vorzugsweise zwischen etwa 300 bis etwa 600 % der stöchiometrisch zur vollständigen Bariumabtrennung notwendigen Menge an Alkalisulfat zugibt.

Zur pH-Wert-Einstellung kann - je nach ursprünglichem pH-Wert der wäßrigen Lösung des Strontiumsalzes - eine Säure oder Base organischer oder anorganischer Natur eingesetzt werden. Sofern eine Säure verwendet wird, setzt man bevorzugt die Säure ein, die dem Anion des Strontiumsalzes entspricht. Als Base ist beispielsweise Alkalihydroxid, z.B. Natriumhydroxid, oder Alkalilauge gut geeignet.

Bevorzugt werden jedoch basische Strontiumverbindungen wie z.B. Strontiumcarbonat oder Strontiumoxid, besonders bevorzugt Strontiumhydroxid oder ein Hydrat davon wie das Octahydrat, verwendet, weil bei Verwendung dieser Verbindungen keine Fremdionen eingebracht werden.

Die Säure oder Base kann der wäßrigen Lösung des Strontiumsalzes und/oder dem Alkalisulfat zugesetzt werden. Besonders geeignet ist der pH-Bereich zwischen etwa 2 und etwa 4. Hervorragend geeignet ist Salzsäure zur pH-Wert-Einstellung, wenn Strontiumchloridlösung verwendet wird. Im erfindungsgemäßen Verfahren wird vorteilhafterweise die Alkalisulfatlösung auf einen pH-Wert von 2 bis 6 eingestellt.

Ein besonders Barium-armes Strontiumsalz, beispielsweise mit einem Gehalt unter 0,01 g Barium pro 100 g Strontiumsalz, wird erhalten, wenn man das Alkalisulfat derart in die wässrige Lösung des Strontiumsalzes gibt, daß pro Stunde 50 bis 400 % der stöchiometrisch zur vollständigen Abtrennung des Bariums notwendigen Menge an Alkalisulfat zugegeben werden.

In Schritt b) wird der ausgefallene Feststoff aus der Lösung abgetrennt. Dies kann nach bekannten Methoden erfolgen, beispielsweise durch Filtrieren, Dekantieren oder Zentrifugieren. Erfindungsgemäß liegt nach der Fällung in Schritt a) und vor dem Abtrennen des ausgefallenen Feststoffes in Schritt b) eine Nachreaktionsphase. Diese kann beispielsweise bis zu 24 Stunden, z.B. etwa 2 bis etwa 15 Stunden betragen.

Es ist vorteilhaft, während der Fällung das Reaktionsgemisch zu rühren. Während der Nachreaktionsphase ist dies nicht notwendig.

Weiterhin kann es vorteilhaft sein, vor der Abtrennung des Feststoffes den pH-Wert der Lösung alkalisch zu stellen, beispielsweise auf einen Wert von etwa 7,5 bis etwa 9 einzustellen. Dies kann mit bekannten anorganischen Basen, beispielsweise Alkalihydroxid bzw. Alkalilauge, erfolgen. Besonders geeignet sind aber basische Strontiumverbindungen, z.B. Strontiumcarbonat, Strontiumoxid und/oder Strontiumhydroxid bzw. Strontiumhydroxid-Hydrate. Hervorragend geeignet ist Strontiumhydroxid. Die basische Strontiumverbindung kann in festem, suspendiertem oder gelöstem Zustand in die Lösung gegeben werden. Diese Einstellung des pH-Wertes im alkalischen Bereich, insbesondere mit Strontiumhydroxid, besitzt den Vorteil, daß der in Schritt a) ausgefallene Feststoff noch schneller filtriert werden kann und daß zudem, falls die wässrige, Barium enthaltende Lösung des Strontiumsalzes auch mit Eisen- oder Aluminiumverbindungen verunreinigt war, diese ebenfalls abgetrennt werden können.

In dieser Ausführungsform gelingt es also, Barium sowie Eisen und/oder Aluminium aus den wasserlöslichen Strontiumsalzen abzutrennen.

Aus dem in Schritt b) erhaltenen Filtrat kann nun ein an Barium abgereichertes Strontiumsalz gewonnen werden. Dies kann z.B. durch physikalische Methoden, beispielsweise durch Verdampfungskristallisation, oder durch dem Fachmann bekannte chemische Reaktionen unter Bildung von schwerlöslichen Strontiumsalzen bewirkt werden.

Das erfindungsgemäße Verfahren kann nicht nur batchweise, sondern auch in kontinuierlicher oder halbkontinuierlicher Verfahrensweise durchgeführt werden. Diese Ausführungsform des erfindungsgemäßen Verfahrens ist dadurch gekennzeichnet, daß man der im Schritt a) erhaltenen, einen Feststoff enthaltenden Lösung in halbkontinuierlicher oder kontinuierlicher Verfahrensweise die wäßrige, Barium enthaltende Lösung eines Strontiumsalzes und das Alkalisulfat zuführt und eine der zugeführten Menge entsprechende Menge an Reaktionsgemisch abführt.

Diese Abtrennung kann beispielsweise durch einen Überlauf erfolgen.

Die nach dem erfindungsgemäßen Verfahren erhaltenen, Barium-armen Strontiumsalze können als solche verwendet werden, Strontiumchlorid beispielsweise als Zusatz für medizinische Zahnpasten.

Die erhaltenen Barium-armen Strontiumsalze sind ferner wertvolle Zwischenprodukte bei der Herstellung von Bildschirmen für Farbfernsehröhren, bei der Katalysatorherstellung sowie der Herstellung von keramischen Permanentmagneten.

Vorteilhaft ist, daß sich das erfindungsgemäße Verfahren ohne Einsatz von Wärmeenergie durchführen läßt, da es bei Umgebungstemperatur durchgeführt werden kann. Ein weiterer Vorteil ist, daß sehr reine Produkte erhalten werden, ohne daß die Einführung toxischer Verbindungen in das Verfahren notwendig ist. Zudem ist das Verfahren leicht beherrschbar und deshalb für die technische Anwendung prädestiniert.

Das folgende Beispiel soll die Erfindung näher erläutern, ohne sie in ihrem Umfang einzuschränken.

### Beispiel

Ein Barium-haltiges Strontiumchlorid, welches 0,5 g Barium pro 100 g Strontiumchlorid enthielt, wurde in Wasser gelöst, bis 12 570 Liter einer Lösung erhalten wurden. Die Konzentration an Strontiumchlorid in dieser Lösung betrug etwa 230 g/l Strontiumchlorid. Diese wässrige Strontiumchloridlösung wurde mit Salzsäure auf einen pH-Wert zwischen etwa 2 und 3 eingestellt.

In diese salzsaure Lösung wurden dann 1000 l einer Natriumsulfatlösung mit einem Gehalt an 7,5 Gew.-% Na₂SO₄, deren pH-Wert auf etwa 4,5 eingestellt worden war, unter Rühren eingeleitet. Die Geschwindigkeit der Zugabe wurde so eingeregelt, daß etwa 150 l pro Stunde dieser Sulfatlösung zugegeben wurden. Die Fällung erfolgte bei Umgebungstemperatur, d.h. etwa 20 °C.

Nach beendeter Zugabe wurde über Nacht stehengelassen, vor der Filtrierung so viel Strontiumhydroxid zugegeben, bis sich ein pH-Wert von etwa 8 bis etwa 8,5 einstellte, und der ausgefallene Feststoff filtriert. Der aus dem Filtrat nach dem Abdampfen gewonnene Feststoff enthielt nur noch 0,003 g Barium pro 100 g Strontiumchlorid.

## Patentansprüche

1. Verfahren zur Abtrennung von Barium aus wasserlöslichen Strontiumsalzen, ausgewählt aus der Gruppe umfassend Strontiumacetat, Strontiumnitrat und Strontiumhalogenide mit Ausnahme von Strontiumfluorid, umfassend die Schritte
a) Fällung eines Feststoffes durch Versetzen einer wäßrigen Barium enthaltenden Lösung des Strontiumsalzes im sauren pH-Bereich mit einer Sulfat freisetzenden Verbindung,
b) Abtrennen des ausgefallenen Feststoffes aus der Lösung und
c) Gewinnen des an Barium abgereicherten Strontiumsalzes aus der Lösung, dadurch gekennzeichnet, daß die wäßrige Lösung das Strontiumsalz in einer Konzentration von 1 Gew.-% bis hin zur Sättigungskonzentration enthält, daß man als Sulfat freisetzende Verbindung Alkalisulfat verwendet, und zwar in Form einer wäßrigen Lösung, die das Alkalisulfat in einer Konzentration von 0,5 Gew.-% bis hin zur Sättigungskonzentration enthält, daß die Lösung des Strontiumsalzes einen pH-Wert zwischen 2 und 6 aufweist, mit der Maßgabe, daß pro Stunde 30 bis 600 % der stöchiometrisch zur vollständigen Bariumabtrennung notwendigen Menge des Alkalisulfats zugegeben werden, und daß man in Schritt b) die Abtrennung des Feststoffes nach einer Nachreaktionsphase durchführt.

2. Verfahren nach Anspruch 1, dadurch gekennzeichnet, daß die wässrige Lösung das Strontiumsalz in einer Konzentration zwischen 5 Gew.-% bis zu 80 % der Sättigungskonzentration, enthält.

3. Verfahren nach Anspruch 1 oder 2, dadurch gekennzeichnet, daß man als Strontiumsalz Strontiumchlorid einsetzt.

4. Verfahren nach einem der Ansprüche 1 bis 3, dadurch gekennzeichnet, daß die wässrige Alkalisulfatlösung das Alkalisulfat in einer Konzentration von 1 bis 10 Gew.-% enthält.

5. Verfahren nach einem der vorhergehenden Ansprüche, dadurch gekennzeichnet, daß man das Alkalisulfat in einer Menge einsetzt, die zwischen etwa 100 % bis etwa 800 %, vorzugsweise zwischen etwa 300 bis etwa 600 % der stöchiometrisch zur vollständigen Bariumabtrennung notwendigen Menge entspricht.

6. Verfahren nach einem der vorhergehenden Ansprüche, dadurch gekennzeichnet, daß das Alkalisulfat derart in die wässrige Lösung des Strontiumsalzes zugegeben wird, daß pro Stunde 50 bis 400 % der stöchiometrisch zur vollständigen Bariumabtrennung notwendigen Menge des Alkalisulfates zugegeben werden.

7. Verfahren nach Anspruch 1, dadurch gekennzeichnet, daß man als Alkalisulfat Natriumsulfat verwendet.

8. Verfahren nach Anspruch 1, dadurch gekennzeichnet, daß man in Schritt b) vor der Abtrennung des Feststoffes den pH-Wert der in Schritt a) erhaltenen Lösung alkalisch, vorzugsweise auf etwa 7,5 bis etwa 9 einstellt.

9. Verfahren nach Anspruch 8, dadurch gekennzeichnet, daß man zur pH-Werteinstellung ein basisches Strontiumsalz, insbesondere Strontiumhydroxid verwendet.

10. Verfahren nach Anspruch 1, dadurch gekennzeichnet, daß man der im Schritt a) erhaltenen, einen Feststoff enthaltenden Lösung in halbkontinuierlicher oder kontinuierlicher Verfahrensweise die wäßrige, Barium enthaltende Lösung eines Strontiumsalzes und das Alkalisulfat zuführt und eine der zugeführten Menge entsprechende Menge an Reaktionsgemisch abführt.

## Claims

1. A method for separating off barium from water-soluble strontium salts, selected from the group comprising strontium acetate, strontium nitrate and strontium halides with the exception of strontium fluoride, comprising the steps
a) precipitating a solid by adding a compound which releases sulphate to an aqueous barium-containing solution of the strontium salt in an acidic pH range,
b) separating the precipitated solid from the solution and
c) recovering the strontium salt which is depleted in barium from the solution, characterised in that the aqueous solution contains the strontium salt in a concentration of 1% by weight up to the saturation concentration, that alkali sulphate is used as the sulphate-releasing compound, namely in the form of an aqueous solution which contains the alkali sulphate in a concentration of 0.5% by weight up to the saturation concentration, that the solution of the strontium salt has a pH value of between 2 and 6, with the proviso that 30 to 600% of the quantity of the alkali sulphate which is stoichiometrically required for complete barium separation is added per hour, and that in step b) the separation of the solid is carried out after a subsequent reaction phase.

2. A method according to Claim 1, characterised in that the aqueous solution contains the strontium salt in a concentration of between 5% by weight and 80% by weight of the saturation concentration.

3. A method according to Claim 1 or 2, characterised in that strontium chloride is used as the strontium salt.

4. A method according to one of Claims 1 to 3, characterised in that the aqueous alkali sulphate solution contains the alkali sulphate in a concentration of 1 to 10% by weight.

5. A method according to one of the preceding Claims, characterised in that the alkali sulphate is used in a quantity which corresponds to between about 100% and about 800%, preferably between about 300 and about 600%, of the quantity stoichiometrically required for complete barium separation.

6. A method according to one of the preceding Claims, characterised in that the alkali sulphate is added to the aqueous solution of the strontium salt such that per hour 50 to 400% by weight of the quantity of the alkali sulphate stoichiometrically required for the complete separation of barium is added.

7. A method according to Claim 1, characterised in that sodium sulphate is used as alkali sulphate.

8. A method according to Claim 1, characterised in that in step b) before the separation of the solid the pH value of the solution obtained in step a) is rendered alkaline, preferably set to approximately 7.5 to approximately 9.

9. A method according to Claim 8, characterised in that a basic strontium salt, in particular strontium hydroxide, is used for setting the pH value.

10. A method according to Claim 1, characterised in that the aqueous, barium-containing solution of a strontium salt and the alkali sulphate are fed in a semi-continuous or continuous operation to the solution containing a solid obtained in step a) and a quantity of reaction mixture corresponding to the quantity supplied is removed.

## Revendications

1. Procédé de séparation de baryum de (solutions aqueuses de) sels hydrosolubles de strontium, choisis dans l'ensemble comprenant l'acétate de strontium, le nitrate de strontium et des halogénures de strontium, à l'exclusion du fluorure de strontium, le procédé comprenant les étapes consistant à :
(a) précipiter un solide, par addition d'un composé libérant du sulfate à une solution aqueuse du sel de strontium, contenant du baryum, dans un domaine acide de pH;
(b) séparer le solide précipité de la solution, et
(c) récupérer de la solution le sel de strontium appauvri en baryum, procédé caractérisé en ce que la solution aqueuse contient le sel de strontium en une concentration de 1 % en poids jusqu'à la concentration à la saturation; en ce qu'on utilise, comme composé libérant du sulfate, un sulfate alcalin et cela sous forme d'une solution aqueuse qui contient le sulfate alcalin en une concentration de 0,5 % en poids jusqu'à la concentration correspondant à la saturation; en ce que la solution du sel de strontium présente un pH compris entre 2 et 6, à la condition que l'on ajoute par heure 30 à 600 % de la quantité du sulfate alcalin stoéchiométriquement nécessaire pour séparer complètement le baryum; et en ce que, à l'étape (b), on conduit la séparation du solide après une phase de post-réaction.

2. Procédé selon la revendication 1, caractérisé en ce que la solution aqueuse contient le sel de strontium en une concentration de 5 % en poids jusqu'à 80 % de la concentration à saturation.

3. Procédé selon la revendication 1 ou 2, caractérisé en ce qu'on utilise, comme sel de strontium, le chlorure de strontium.

4. Procédé selon l'une des revendications 1 à 3, caractérisé en ce que la solution aqueuse de sulfate alcalin contient le sulfate alcalin en une concentration de 1 à 10 % en poids.

5. Procédé selon l'une des revendications précédentes, caractérisé en ce qu'on utilise le sulfate alcalin en une quantité se situant entre environ 100 % et environ 800 %, avantageusement entre environ 300 et environ 600 % de la quantité stoéchiométriquement nécessaire pour une séparation complète du baryum.

6. Procédé selon une des revendications précédentes, caractérisé en ce qu'on ajoute le sulfate alcalin à la solution aqueuse du sel de strontium de façon à ajouter par heure 50 à 400 % de la quantité du sulfate alcalin stoéchiométriquement nécessaire pour la séparation complète du baryum.

7. Procédé selon la revendication 1, caractérisé en ce qu'on utilise comme sulfate alcalin le sulfate de sodium.

8. Procédé selon la revendication 1, caractérisé en ce que, dans l'étape (b) on alcalinise le pH de la solution obtenue dans l'étape (a), en le portant avantageusmeent à une valeur comprise entre environ 7,5 et environ 9, avant d'effectuer la séparation du solide.

9. Procédé selon la revendication 8, caractérisé en ce que, pour ajuster la valeur du pH, on utilise un sel basique de strontium, notamment l'hydroxyde de strontium.

10. Procédé selon la revendication 1, caractérisé en ce qu'on introduit de façon semi-continue ou continue la solution aqueuse d'un sel de strontium, contenant du baryum, et le sulfate alcalin dans la solution obtenue à l'étape (a) et contenant un solide, et en ce qu'on enlève une quantité du mélange réactionnel correspondant à la quantité qui y est introduite.
